# EUROPÄISCHE PATENTSCHRIFT

(11) **EP 2 965 005 B1**
(45) Veröffentlichungstag und Bekanntmachung des Hinweises auf die Patenterteilung: **29.08.2018**
(21) Anmeldenummer: 14712202.2
(22) Anmeldetag: 28.02.2014
(51) Int. Cl.: F23J 13/04

(54) **KAMINROHR SOWIE ABGASANLAGE UND VERFAHREN ZUR HERSTELLUNG EINER ABGASANLAGE MIT EINEM SOLCHEN KAMINROHR**
CHIMNEY PIPE, AND EXHAUST GAS SYSTEM AND METHOD FOR PRODUCING AN EXHAUST GAS SYSTEM HAVING SUCH A CHIMNEY PIPE
CONDUIT DE CHEMINÉE, SYSTÈME D'ÉVACUATION DES GAZ DE COMBUSTION ET PROCÉDÉ PERMETTANT DE FABRIQUER UN SYSTÈME D'ÉVACUATION DES GAZ DE COMBUSTION AU MOYEN D'UN TEL CONDUIT DE CHEMINÉE

(30) Priorität: 04.03.2013 DE 202013002004 U
(43) Veröffentlichungstag der Anmeldung: 13.01.2016
(73) Patentinhaber: Jeremias GmbH Fachgrosshandel für Schornsteinbedarf, 91717 Wassertrüdingen (DE)
(72) Erfinder: ENGELHARDT, Stefan, 80469 München (DE)
(74) Vertreter: FDST Patentanwälte
(86) Internationale Anmeldenummer: PCT/EP2014/000526
(87) Internationale Veröffentlichungsnummer: WO 2014/135259

(56) Entgegenhaltungen:
- EP-A2- 0 798 513
- DE-A1-102004 028 385
- DE-U1- 20 112 692
- US-A- 1 854 515
- US-A1- 2008 007 055

## Beschreibung

Die Erfindung betrifft ein Kaminrohr insbesondere für einen Edelstahlabgasanlage mit zwei gegenüberliegenden Verbindungsenden zur Ausbildung einer Steckverbindung mit weiteren Kaminrohren sowie mit einem Mittenteil zwischen den Verbindungsenden. Die Erfindung betrifft weiterhin einen aus derartigen Kaminrohren zusammengesetzten Abgasanlage, insbesondere Edelstahl-Abgasanlage sowie ein Verfahren zum Herstellen einer solchen Abgasanlage.

Zum Aufbau einer Metall-Abgasanlage oder Schornsteins, insbesondere Edelstahlabgasanlage, sowohl für Innen- als auch für Außenanwendung werden üblicherweise mehrere Kaminrohre ineinander gesteckt. Hierbei gibt es sowohl einwandige als auch doppelwandige Ausführungsvarianten. Bei der doppelwandigen Ausführungsvariante weist das Kaminrohr ein Innenrohr sowie ein Außenrohr und eine dazwischen angeordnete Isolationszwischenlage auf. Doppelwandige Abgasanlagensysteme werden insbesondere für den Außenbereich vorgesehen.

Derartige Abgasanlagensysteme sind beispielsweise zu entnehmen aus der DE 94 19 304 U1, der DE 295 22 176 U1 und der EP 0 798 513 A2. Aus letzterer ist ein doppelwandiges System zu entnehmen.

Zur Ausbildung von dichten Steckverbindungen zwischen den einzelnen Kaminrohren weisen diese endseitig jeweils Steckmuffen auf, die typischerweise konisch aufgeweitet bzw. konisch verjüngend ausgebildet sind.

Um für unterschiedliche Anforderungen universell einsetzbar zu sein, sind derartige Abgasanlagensysteme insgesamt aus mehreren Modulbauteilen zusammengesetzt. So werden typischerweise unterschiedlich lange Kaminrohre vorgehalten, um eine Abgasanlage mit einer gewünschten Gesamt-Länge ausbilden zu können.

Ausgehend hiervon liegt der Erfindung die Aufgabe zu Grunde, ein flexibles Kaminrohr-System zu ermöglichen.

Aus der US 1 854 515 A sind emaillierte Ofenrohre zu entnehmen, welche die Merkmale des Oberbegriffs des Anspruchs 1 offenbaren und welche insgesamt konisch verlaufen, so dass sie an ihrem einen Ende eine größeren Innendurchmesser als Außendurchmesser am gegenüberliegenden Ende aufweisen und dadurch ineinander gesteckt werden können. Im Verbindungsbereich ist weiterhin in bevorzugter Ausgestaltung ein elastisches Dichtmittel angeordnet.
Aus der DE 201 12 692 U1 sind Abgasrohre zu entnehmen, die zum Ineinanderstecken an ihren gegenüberliegenden Enden jeweils zueinander passende konische Abschnitte aufweisen, die jeweils eine schraubenlinienförmige Sicke aufweisen, über die die beiden Enden nach Art eines Schraubvorgangs ineinandergezogen werden.
Weitere Abgasrohre, die durch Ineinanderstecken zusammengefügt werden sind beispielsweise zu entnehmen aus DE 10 2004 028 385 A1 oder aus US 2008/0007055 A1.
Die Aufgabe wird gemäß der Erfindung gelöst durch ein Kaminrohr, insbesondere für eine Edelstahlabgasanlage mit den Merkmalen des Anspruchs 1. Das Kaminrohr weist zwei gegenüberliegende Verbindungsenden auf zur Ausbildung einer Steckverbindung mit weiteren Kaminrohren sowie ein Mittelteil zwischen den Verbindungsenden, wobei das erste, im montierten Zustand untere Verbindungsende einen konischen Steckbereich ausbildet und das zweite, gegenüberliegende und im Montageendzustand obere Verbindungsende zylindrisch ausgebildet ist.
Im Hinblick auf eine zuverlässige, sichere Abdichtung ist in der montierten Position zweier ineinander gesteckter Kaminrohre das zylindrische Verbindungsende durch das konische Verbindungsende etwas konisch aufgeweitet. Das zylindrische Verbindungsende passt sich daher dem konischen Verbindungsende an. Letzteres weitet daher nach Art einer Matrize das zylindrische Verbindungsende beim Einstecken etwas auf, so dass sich die beiden Verbindungsenden dichtend aneinander legen.

Durch die nur einseitige konische Ausgestaltung wird weiterhin eine zuverlässige, gasdichte Steckverbindung zwischen zwei aufeinander folgenden Kaminrohren sicher gestellt. Zur gasdichten Abdichtung sind neben dem Ineinanderstecken der Kaminrohre vorzugsweise keine weiteren Maßnahmen erforderlich und vorgesehen. Das konische Verbindungsende wird dabei in das zylindrische Verbindungsende eines zweiten Kaminrohrs eingesteckt. Durch die rein zylindrische Ausbildung des oberen Verbindungsendes wird der besondere Vorteil erzielt, dass das Kaminrohr selbst ohne Probleme auf eine gewünschte Länge kürzbar ist. Gleichzeitig bleibt die volle Funktion beibehalten, so dass unmittelbar vor Ort auf der Baustelle das jeweilige Kaminrohr exakt auf die gewünschte Länge abgelängt werden kann.

Aufgrund der zylindrischen Ausgestaltung des Kaminrohrs im Bereich des zweiten Verbindungsendes kann es an dieser Seite gekürzt werden, ohne dass weitere Maßnahmen zur Ausbildung eines neuen zylindrischen Verbindungsendes erforderlich sind. Das Rohrende bildet daher an der Trennstelle ohne weitere Maßnahmen ein neues zylindrisches Verbindungsende aus.

Hierzu ist zweckdienlicherweise vorgesehen, dass der Innendurchmesser des zylindrischen Verbindungsendes identisch zu dem Innendurchmesser des Mittenteils ist. Das zylindrische Verbindungsende fluchtet daher mit dem Mittenteil.

Im Hinblick auf eine zuverlässige, sichere Abdichtung ist in der montierten Position zweier ineinander gesteckter Kaminrohre das zylindrische Verbindungsende durch das konische Verbindungsende etwas konisch aufgeweitet. Das zylindrische Verbindungsende passt sich daher dem konischen Verbindungsende an. Letzteres weitet daher nach Art einer Matrize das zylindrische Verbindungsende beim Einstecken etwas auf, so dass sich die beiden Verbindungsenden dichtend aneinander legen.

Um ein einfaches Einführen des konischen Verbindungsendes in das zylindrische Verbindungsende zu ermöglichen weist der konische Steckbereich endseitig vorzugsweise eine radial nach innen geneigte Einführphase auf, welche einen größeren Neigungswinkel als der eigentliche konische Steckbereich aufweist.

Ergänzend ist in der bevorzugten Weiterbildung im konischen Steckbereich eine umlaufende Rille ausgebildet, welche als Kapillarsperre wirkt.

Ergänzend ist weiterhin zumindest an einem Verbindungsende eine umlaufende Sicke ausgebildet, welche zur Montage insbesondere eines Klemmbandes oder auch einer Befestigungsschelle dient. Die umlaufende Sicke schließt sich mittelbar an den konischen Steckbereich an, bevorzugt diesen also. Sie ist dabei in der Innenwandung durch eine Umformung ausgebildet, so dass an der Außenseite eine ringförmig umlaufende Rippe ausgebildet ist.

Grundsätzlich kann und ist in bevorzugter Ausgestaltung im Bereich des zylindrischen Verbindungsendes ebenfalls eine solche Sicke ausgebildet. Bei Bedarf besteht weiterhin die Möglichkeit, das Kaminrohr an diesem zylindrischen Ende anzulängen. Aufgrund der miteinander fluchtenden Innendurchmesser ist die Funktion der Steckverbindung unabhängig von der Anordnung der umlaufenden Sicke im Bereich des zylindrischen Verbindungsendes.

Bevorzugt ist jedoch eine Ausgestaltung, bei der eine derartige umlaufende Sicke im zylindrischen Endbereich nicht vorgesehen ist.

Der Konuswinkel des konischen Steckbereichs liegt üblicherweise im Bereich von 0,5° - 3° und insbesondere im Bereich von 1°. Weiterhin weist der konische Steckbereich eine axiale Länge im Bereich vom 40mm - 100mm auf und liegt beispielsweise typischerweise bei 75mm bei einem Innenrohr-Durchmesser von beispielsweise 150mm.

Die Ausgestaltung mit dem zylindrischen Verbindungsende wird vorzugsweise für einwandige Kaminrohre herangezogen. In einer alternativen bevorzugten Ausgestaltung ist das Kaminrohr aber auch als doppelwandiges Kaminrohr mit einem Innenrohr, einem Außenrohr und einer Isolationszwischenlage ausgebildet.

Bei dieser Ausgestaltung ist vorzugsweise lediglich das Innenrohr mit dem konischen und dem zylindrischen Verbindungsende ausgebildet. Diese Ausgestaltung erlaubt also auch ein vereinfachtes Zusammenstecken von doppelwandigen Kaminrohren und ermöglicht gleichzeitig ein bedarfsweises Ablängen derartiger doppelwandiger Kaminrohre.

Zur Ausbildung der Steckverbindung ist dabei im konischen Steckbereich keine Isolationszwischenlage zwischen Außenrohr und Innenrohr ausgebildet. Zum Zusammenstecken wird das Außenrohr im Bereich des konischen Verbindungsendes über das zugeordnete Außenrohr des anderen Kaminrohrs an dessen zylindrischen Verbindungsende geschoben. Der konische Steckbereich wird daher bei dem Innenrohrer innenseitig eingesteckt und das Außenrohr außenseitig aufgesteckt.

Für eine einfache Montage ist das Außenrohr im Bereich des konischen Verbindungsendes etwas radial aufgeweitet und weist eine entsprechend ausgebildete, radial nach außen aufgeweitete Fase auf. Unabhängig von dieser Fase ist das Außenrohr im konischen Steckbereich des Innenrohrs zylindrisch ausgebildet.

Die Aufgabe wird erfindungsgemäß weiterhin gelöst durch eine Abgasanlage, insbesondere Edelstahlabgasanlage, sowie durch ein Verfahren zur Herstellung einer derartigen Abgasanlage, mit mehreren derartigen Kaminrohren, welche ineinander gesteckt sind.

Das gesamte Abgasanlagensystem zeichnet sich durch eine einfache Ablängbarkeit der einzelnen Kaminrohre auf Grund des rein zylindrischen Verbindungsendes aus. Gleichzeitig ist eine zuverlässige Abdichtung im Steckverbindungsbereich gewährleistet. Dies erfolgt insbesondere ausschließlich durch die konisch-zylindrische Passung, wobei bei der Montage insbesondere eine konische Verformung des zylindrischen Bereichs erfolgt.

Ein derartiges Abgasanlagensystem lässt sich sowohl für Unterdruck- als auch für Überdruck-Anwendungen einsetzen. Bei Bedarf können zusätzliche Dichtelemente im Steckverbindungsbereich angeordnet sein.

Die im Hinblick auf das Kaminrohr angeführten Vorteile und bevorzugten Ausgestaltungen sind sinngemäß auch auf die Abgasanlage sowie auf das Verfahren zu übertragen.

Ausführungsbeispiele der Erfindung werden im Folgenden anhand der Figuren näher erläutert. Diese zeigen:
- Figur 1: ein Kaminrohr in Seitendarstellung,
- Figur 2: zwei zusammengesetzte Kaminrohre in einer unterbrochenen Seiten-Darstellung,
- Figur 3: eine vergrößerte Darstellung des Steckverbindungsbereichs zwischen den beiden Kaminrohren gemäß Figur 2,
- Figuren 4A - 4D: unterschiedliche Ausführungsvarianten eines einwandigen Kaminrohrs,
- Figuren 5A - 5D: vergrößerte Darstellungen des jeweils mit einem Kreis in den Figuren 4A - 4D gekennzeichneten Bereichs,
- Figuren 6A - 6D: unterschiedliche Ausführungsvarianten eines doppelwandigen Kaminrohrs sowie

- Figuren 7A - 7D: vergrößerte Darstellungen des jeweils mit einem Kreis in den Figuren 6A - 6D gekennzeichneten Bereichs.

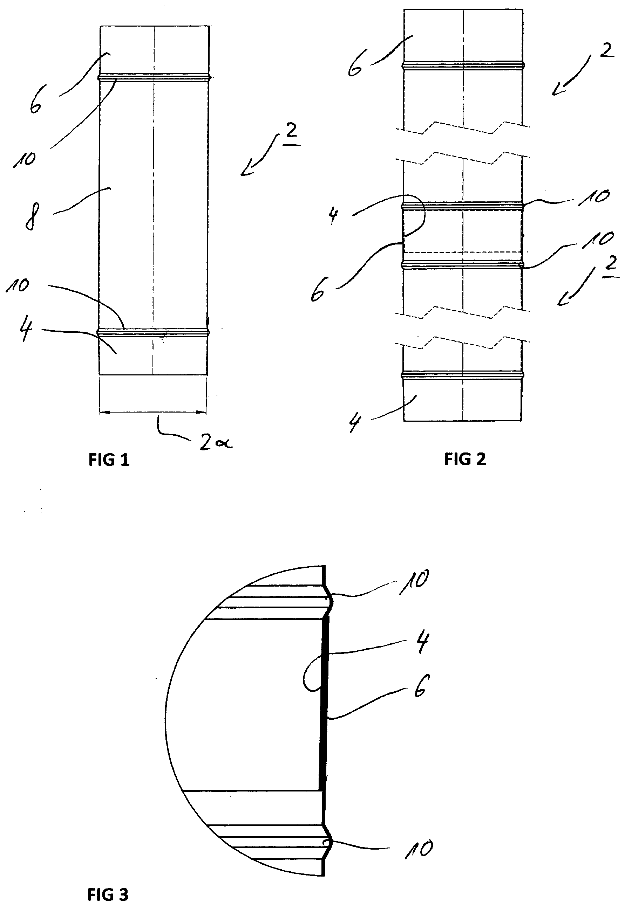

Das in Figur 1 dargestellte Kaminrohr 2 erstreckt sich in Längsrichtung von einem unteren Verbindungsende mit einem konischen Steckbereich 4 bis zu einem oberen zylindrischen Verbindungsende 6. Dazwischen ist ein Mittenteil 8 angeordnet, welcher zu den beiden Enden 4, 8 durch eine umlaufende Sicke 10 abgetrennt ist. Der Mittenteil 8 ist dabei streng zylindrisch ausgebildet und fluchtet mit dem zylindrischen Verbindungsende 6. Beide Teilbereiche weisen daher durchgehend den gleichen (Kreis) Querschnitt, insbesondere Innenquerschnitt auf. Der konische Steckbereich 4 erstreckt sich in Längsrichtung von dem stirnseiten Ende des Kaminrohrs 2 bis zum Beginn der unteren Sicke 10. Die axiale Länge liegt dabei typischerweise im Bereich von etwa 75mm.

Das Kaminrohr 2 weist im konischen Steckbereich einen Konuswinkel α auf, der im Ausführungsbeispiel bei 1 liegt. In Figur 1 ist der doppelte Konuswinkel 2α eingezeichnet.

Wie insbesondere aus den vergrößerten Darstellungen der Figur 3 hervorgeht, schmiegt sich im montierten Zustand das zylindrische Verbindungsende 6 außen an den konischen Steckbereich 4 an. Der konische Steckbereich 4 weitet daher das zylindrische Verbindungsende 6 zumindest am oberen, stirnseitigen Verbindungsende etwas auf. Der Innendurchmesser des konischen Steckbereichs 4 an seinem oberen, der Sicke 10 zugewandten Fußbereich, wo der konische Steckbereich 4 den größten Durchmesser aufweist, ist vorzugsweise identisch zu dem Innendurchmesser des Mittenteils und des zylindrischen Verbindungsendes 6. Der konische Steckbereich 4 fluchtet daher mit dem zylindrischen Mittenteil 8. Durch diese Maßnahme hat der konische Steckbereich 4 an seinem Fußbereich mit dem größten Durchmesser einen um die doppelte Wandstärke des Kaminrohres größeren Außendurchmesser im Vergleich zum Innendurchmesser des zylindrischen Verbindungsendes 6, was zu der radialen Aufweitung und konischen Anpassung des zylindrischen Verbindungsbereichs 6 im montieren Endzustand führt. Dadurch ist eine zuverlässige Abdichtung sichergestellt.

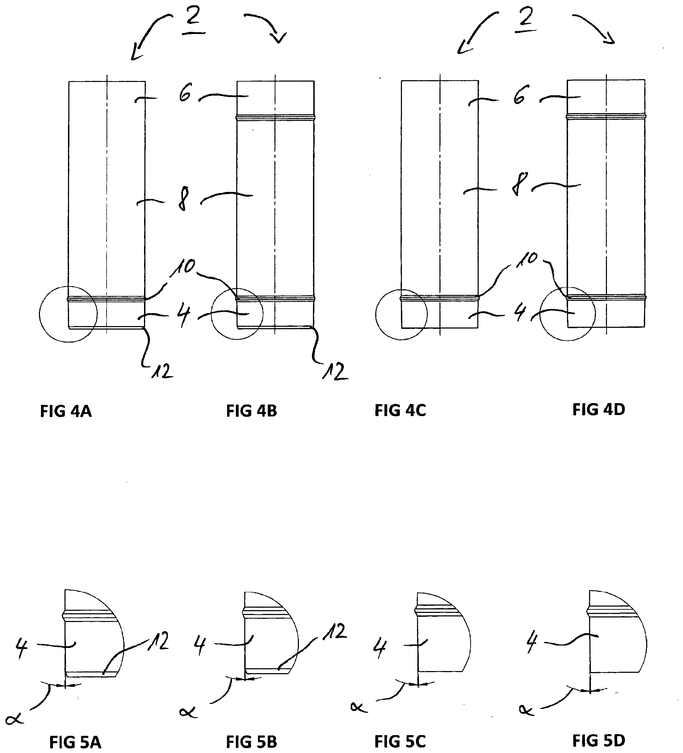

Die Figuren 4A - 4D in Ergänzung zu den Figuren 5A - 5D zeigen unterschiedliche Ausführungsvarianten des einwandige Kaminrohrs 2. Die Figur 4A mit zugehörigen Figur 5A zeigt dabei ein Kaminrohr 2, welches lediglich am unteren konischen Verbindungsende 4 eine Sicke 10 aufweist. Der dessen gegenüberliegende Endbereich ist frei von einer Sicke 10. Der Mittenteil 8 geht daher identisch in das zylindrische Verbindungsende 6 über. Diese sind ununterscheidbar ausgebildet.

Weiterhin ist aus der vergrößerten Darstellung gemäß der Figur 5A zu erkennen, däss stirnseitig der konische Steckbereich 4 eine Einführfase 12 aufweist, welche das Einstecken in das jeweilige zylindrische Verbindungsende 6 eines zugeordneten Kaminrohrs 2 erleichtert.

Figur 4B zeigt eine Ausführungsvariante, bei der auch im Bereich des zylindrischen Verbindungsendes 6 eine umlaufende Sicke 10 ausgebildet ist. Die beiden Sicken 10 sind dabei zumindest etwa gleich weit von den gegenüberliegenden stirnseitigen Enden des Kaminrohrs beabstandet.

Die Figuren 4C und 4D zeigen zu den Figuren 4A und 4B vergleichbare Ausführungsvarianten, wobei hier jedoch der konische Steckbereich 4 geradlinig zum Stirnrand ausläuft, also keine endseitige Einführfase 12 aufweist.

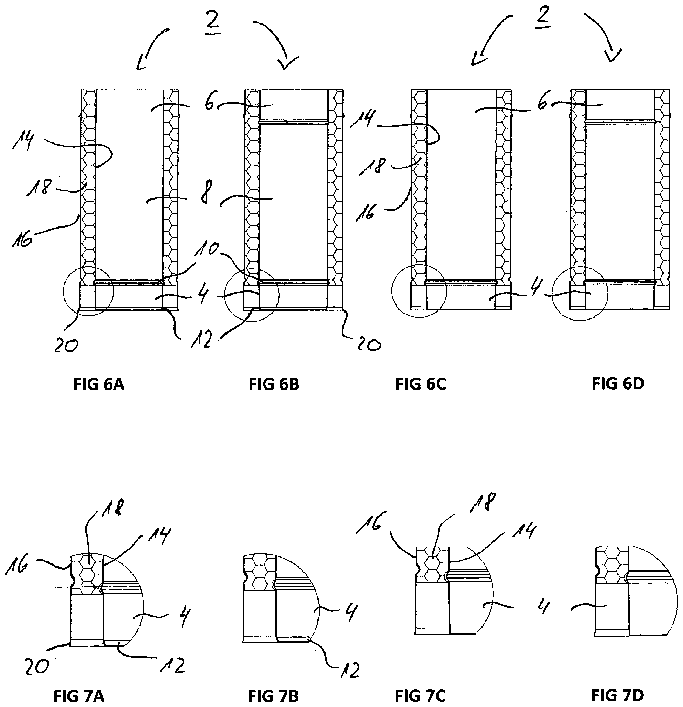

Die Figuren 6A - 6D zeigen eine doppelwandige Ausführungsvariante eines Kaminrohrs 2 beispielsweise für die Außenanwendung. Das jeweilige Kaminrohr 2 weist danach ein Innenrohr 14, ein Außenrohr 16 sowie eine Isolationszwischenlage 18 auf. Das Innenrohr 14 ist dabei jeweils entsprechend dem zu den Figuren 4A - 4D beschriebenen Kaminrohr 2 ausgebildet. Die in den Figuren 4A - 4D dargestellten Kaminrohre 2 können daher ohne weitere Änderungen auch für eine doppelwandige Ausführungsvariante herangezogen werden.

Wie aus den Figuren 6A - 6D und insbesondere auch in Kombination mit den Figuren 7A -7D zu entnehmen ist, ist die Isolationszwischenlage 18 im konischen Steckbereich 4 nicht mehr weitergeführt. Dort ist ein Freiraum zwischen Innenrohr 14 und Außenrohr 16 ausgebildet. Dieser wird beim Zusammenstecken zweier Kaminrohre 2 über das gegenüberliegende zylindrische Verbindungsende 6 gestülpt, so dass also der Abschnitt des Außenrohrs 16 das zylindrische Ende des zugeordneten Außenrohrs 16 außenseitig umfasst und der konische Steckbereich 4 des Innenrohrs 14 wiederrum innenseitig in das zylindrische Verbindungsende 6 des zugeordneten Innenrohrs 14 eingreift. Gleichzeitig ist die Isolationszwischenlage 18 unterbrechungsfrei bis zu dem oberen Stirnrand im Bereich des zylindrischen Verbindungsendes 6 durchgeführt. Sowohl das Außenrohr 16 als auch das Innenrohr 14 sind im Bereich des zylindrischen Verbindungsendes 6 durchgehend zylindrischen ausgebildet und fluchten insbesondere jeweils mit einem jeweiligen Mittenteil 8 des Innenrohrs 14 sowie des Außenrohrs 16.

Wie insbesondere aus den vergrößerten Darstellungen der Figuren 7A - 7D zu entnehmen ist, weist das Außenrohr 16 stirnendseitig im konischen Steckbereich 4 eine nach Art einer Fase 20 ausgebildete radiale Aufweitung auf. Dies erleichtert insbesondere auch in Kombination mit der radial nach innen gezogenen Fase 12 am Innenrohr 14 die Montage.

### Bezugszeichenliste

- 2: Kaminrohr
- 4: konischer Steckbereich
- 6: zylindrisches Verbindungselementende
- 8: Mittenteil
- 10: Sicke
- 12: Einführfase
- 14: Innenrohr
- 16: Außenrohr
- 18: Isolationszwischenlage
- 20: Fase
- α: Konuswinkel

## Patentansprüche

1. Kaminrohr (2) insbesondere für einen Edelstahl-Abgasanlage mit zwei gegenüberliegenden Verbindungsenden (4, 6) zur Ausbildung einer Steckverbindung mit weiteren Kaminrohren (2) sowie mit einem Mittenteil (8) zwischen den Verbindungsenden (4, 6),
**dadurch gekennzeichnet,**
**dass** das erste Verbindungsende (4) einen konischen Steckbereich (4) aufweist und das zweite Verbindungsende (6) im Ausgangszustand zylindrisch ausgebildet ist, wobei das erste und das zweite Verbindungsende (4,6) derart ausgebildet sind, dass zur Ausbildung der Steckverbindung zwischen dem Kaminrohr (2) und einem weiteren Kaminrohr (2), welches auch ein erstes Verbindungsende (4) wie das Kaminrohr (2) und ein zweites Verbindungsende (6) wie das Kaminrohr (2) aufweist, so dass beim Verbinden des Kaminrohrs (2) mit dem weiteren Kaminrohr (2) das zylindrische Verbindungsende (6) des einen Kaminrohrs (2) durch den konischen Steckbereich (4) des weiteren Kaminrohrs (2) konisch aufgeweitet wird, so dass bei den ineinander gesteckten Kaminrohren (2) die beiden Verbindungsenden (4,6) dichtend aneinander anliegen.

2. Kaminrohr (2) nach Anspruch 1,
**dadurch gekennzeichnet,**
**dass** es auf der dem zylindrischen Verbindungsende (6) zugewandten Seite ablängbar ist und das Rohrende an der Trennstelle ohne weitere Maßnahmen ein neues zylindrisches Verbindungsende (6) ausbildet.

3. Kaminrohr (2) nach einem der Ansprüche 1 oder 2,
**dadurch gekennzeichnet,**
**dass** der Innendurchmesser des zylindrischen Verbindungsendes (6) identisch zu dem Innendurchmesser des Mittenteils (8) ist.

4. Kaminrohr (2) nach einem der vorhergehenden Ansprüche,
**dadurch gekennzeichnet,**
**dass** der konische Steckbereich (4) endseitig eine radial nach innen geneigte Einführfase (12) aufweist.

5. Kaminrohr (2) nach einem der vorhergehenden Ansprüche, wobei im konischen Steckbereich (4) eine umlaufende Rille als Kapillarsperre ausgebildet ist.

6. Kaminrohr (2) nach einem der vorhergehenden Ansprüche,
**dadurch gekennzeichnet,**
**dass** anschließend an zumindest einem der Verbindungsenden (4,6) eine umlaufende Sicke (10) ausgebildet ist.

7. Kaminrohr (2) nach Anspruch 6,
**dadurch gekennzeichnet,**
**dass** im Bereich des zylindrischen Verbindungsendes (6) keine Sicke (10) ausgebildet ist.

8. Kaminrohr (2) nach einem der vorhergehenden Ansprüche,
**dadurch gekennzeichnet,**
**dass** der konische Steckbereich einen Konuswinkel (α) im Bereich von 0,5° bis 3°, insbesondere von 1° aufweist und dass der konische Steckbereich (4) eine axiale Länge im Bereich von 40 mm bis 100 mm aufweist.

9. Kaminrohr (2) nach einem der vorhergehenden Ansprüche,
**dadurch gekennzeichnet,**
**dass** es als doppelwandiges Kaminrohr (2) mit einem Innenrohr (14), einem Außenrohr (16) und einer Isolationszwischenlage (18) ausgebildet ist.

10. Kaminrohr (2) nach Anspruch 9,
**dadurch gekennzeichnet,**
**dass** das Innenrohr (14) mit dem konischen Steckbereich (4) ausgebildet ist.

11. Kaminrohr (2) nach Anspruch 9 oder 10,
**dadurch gekennzeichnet,**
**dass** im konischen Steckbereich (4) keine Isolationszwischenlage (18) zwischen Außenrohr (16) und Innenrohr (14) ausgebildet ist.

12. Kaminrohr (2) nach einem der Ansprüche 9 bis 11,
**dadurch gekennzeichnet,**
**dass** das Außenrohr (16) endseitig im Bereich des konischen Verbindungsendes (4) eine radial nach außen aufgeweitete Fase (20) aufweist.

13. Abgasanlage, insbesondere Edelstahl-Abgasanlage, mit mehreren Kaminrohren (2) nach einem der vorhergehenden Ansprüche, wobei das erste Verbindungsende eines ersten Kaminrohres (2) mit seinem konischen Steckbereich (4) in das zweite Verbindungsende (6) eines zweiten Kaminrohres (2) eingesteckt ist, wobei hierdurch das zweite Verbindungsende (6) konisch aufgeweitet ist, so dass die beiden Verbindungsenden dichtend aneinander anliegen.

14. Verfahren zur Herstellung einer Abgasanlage unter Verwendung mehrerer Kaminrohre (2) nach einem der Ansprüche 1 bis 13, bei dem zwei Kaminrohre (2) ineinander gesteckt werden und hierbei das zylindrische Verbindungsende (6) des ersten Kaminrohrs (2) durch den konischen Steckbereich (4) des zweiten Kaminrohrs (2) konisch aufgeweitet wird, so dass sich die beiden Verbindungsenden dichtend aneinander legen.

15. Verfahren nach Anspruch 14, bei dem eines der Kaminrohre (2) auf der Seite des zweiten Verbindungsendes (6) abgelängt wird und durch das Ablängen ein neues, zylindrischen zweites Verbindungsende (6) ausgebildet wird, welches mit einem konischen Steckbereich (4) eines ersten Verbindungsendes des zweiten Kaminrohrs (2) durch Stecken verbunden wird.

## Claims

1. Chimney pipe (2), especially for a refined steel exhaust gas system with two opposite connection ends (4, 6) to form a plug-in connection with additional chimney pipes (2) and with a middle piece (8) between the connection ends (4, 6), **characterized in that** the first connection end (4) has a conical insertion region (4) and the second connection end (6) is cylindrical in configuration in the initial state, wherein the first and the second connection ends (4, 6) are configured in such a manner that, in order to form the plug-in connection between the chimney pipe (2) and a further chimney pipe (2), which also has a first connection end (4) like the chimney pipe (2) and a second connection end (6) like the chimney pipe (2), so that when the chimney pipe (2) is connected to the further chimney pipe (2), the cylindrical connection end (6) of the first chimney pipe (2) is conically widened by the conical connection region (4) of the further chimney pipe (2), so that in the case of the interconnected chimney pipes (2), the two connection ends (4, 6) lie tightly against each other.

2. Chimney pipe (2) according to Claim 1, **characterized in that** it can cut to length at the side facing the cylindrical connection end (6) and the pipe end at the separation site forms a new cylindrical connection end (6) without any additional measures.

3. Chimney pipe (2) according to either of Claims 1 and 2, **characterized in that** the inner diameter of the cylindrical connection end (6) is identical to the inner diameter of the middle piece (8).

4. Chimney pipe (2) according to one of the preceding claims, **characterized in that** the conical insert region (4) preferably has a terminal, radially inward sloping insert bevel (12).

5. Chimney pipe (2) according to one of the preceding claims, wherein an encircling groove is formed in the conical insert region (4), as a capillary barrier.

6. Chimney pipe (2) according to one of the preceding claims, **characterized in that** at least at one of the connection ends (4, 6) there is formed an encircling bead (10).

7. Chimney pipe (2) according to Claim 6, **characterized in that** no bead (10) is formed in the region of the cylindrical connection end (6).

8. Chimney pipe (2) according to one of the preceding claims, **characterized in that** the cone angle (a) of the conical insert region is in the range of 0.5° to 3°, especially 1°, and **in that** the conical insert region (4) has an axial length in the range of 40 mm to 100 mm.

9. Chimney pipe (2) according to one of the preceding claims, **characterized in that** it is fashioned as a double-wall chimney pipe (2) with an inner pipe (14), an outer pipe (16), and an intermediate insulating layer (18).

10. Chimney pipe (2) according to Claim 9, **characterized in that** the inner pipe (14) is fashioned with the conical connection region (4).

11. Chimney pipe (2) according to Claim 9 or 10, **characterized in that** no intermediate insulating layer (18) is formed between outer pipe (16) and inner pipe (14) in the conical insert region (4).

12. Chimney pipe (2) according to one of Claims 9 to 11, **characterized in that** the outer pipe (16) has a radially outwardly widened bevel (20) at the end in the region of the conical connection end (4).

13. Exhaust gas system, especially a refined steel exhaust gas system, with several chimney pipes (2) according to one of the preceding claims, wherein the first connection end of a first chimney pipe (2) is shoved by its conical connection region (4) into the second connection end (6) of the second chimney pipe (6), thereby conically widening the second connection end (6), so that the two connection ends lie tightly against each other.

14. Method for the production of an exhaust gas system, making use of several chimney pipes (2) according to one of Claims 1 to 13, in which two chimney pipes (2) are inserted one into the other and the cylindrical connection end (6) of the first chimney pipe (2) is conically widened by the conical connection region (4) of the second chimney pipe (2) as a result, so that the two connection ends lie tightly against each other.

15. Method according to Claim 14, wherein one of the chimney pipes (2) is cut to length at the side with the second connection end (6) and by the cutting to length a new cylindrical second connection end (6) is formed, which is joined by inserting with a conical insert region (4) of a first connection end of another chimney pipe (2).

## Revendications

1. Conduit de cheminée (2), notamment pour un système d'évacuation des fumées en acier inoxydable comprenant deux extrémités de liaison (4, 6) opposées en vue de former une liaison par enfichage avec d'autres conduits de cheminée (2) et comprenant également une partie centrale (8) entre les extrémités de liaison (4, 6),
**caractérisé en ce**
**que** la première extrémité de liaison (4) possède une zone d'enfichage conique (4) et la deuxième extrémité de liaison (6) est réalisée en forme de cylindre à l'état initial, les première et deuxième extrémités de liaison (4, 6) étant configurées de telle sorte que pour former la liaison par enfichage entre le conduit de cheminée (2) et un conduit de cheminée (2) supplémentaire, lequel possède également une première extrémité de liaison (4) comme le conduit de cheminée (2) et une deuxième extrémité de liaison (6) comme le conduit de cheminée (2), de sorte que lors de la liaison du conduit de cheminée (2) avec le conduit de cheminée (2) supplémentaire, l'extrémité de liaison (6) cylindrique de l'un des conduits de cheminée (2) est élargie de manière conique par la zone d'enfichage conique (4) du conduit de cheminée (2) supplémentaire, de sorte que lorsque les conduits de cheminée (2) sont enfichés l'un dans l'autre, les deux extrémités de liaison (4, 6) reposent l'une contre l'autre en réalisant l'étanchéité.

2. Conduit de cheminée (2) selon la revendication 1, **caractérisé en ce qu'**il peut être coupé à longueur du côté faisant face à l'extrémité de liaison (6) cylindrique et l'extrémité de conduit forme, au niveau du point de sectionnement, une nouvelle extrémité de liaison (6) cylindrique sans mesures supplémentaires.

3. Conduit de cheminée (2) selon l'une des revendications 1 ou 2, **caractérisé en ce que** le diamètre intérieur de l'extrémité de liaison (6) cylindrique est identique au diamètre intérieur de la partie centrale (8).

4. Conduit de cheminée (2) selon l'une des revendications précédentes, **caractérisé en ce que** la zone d'enfichage conique (4) possède du côté de l'extrémité un chanfrein d'insertion (12) incliné dans le sens radial vers l'intérieur.

5. Conduit de cheminée (2) selon l'une des revendications précédentes, une cannelure circulaire faisant office de blocage capillaire étant formée dans la zone d'enfichage conique (4).

6. Conduit de cheminée (2) selon l'une des revendications précédentes, **caractérisé en ce qu'**un collet (10) circulaire est ensuite formé à au moins l'une des extrémités de liaison (4, 6).

7. Conduit de cheminée (2) selon la revendication 6, **caractérisé en ce qu'**aucun collet (10) n'est formé dans la zone de l'extrémité de liaison (6) cylindrique.

8. Conduit de cheminée (2) selon l'une des revendications précédentes, **caractérisé en ce que** la zone d'enfichage conique présente un angle de cône (α) dans la plage de 0,5° à 3°, notamment de 1°, et **en ce que** la zone d'enfichage conique (4) présente une longueur axiale dans la plage de 40 mm à 100 mm.

9. Conduit de cheminée (2) selon l'une des revendications précédentes, **caractérisé en ce qu'**il est réalisé sous la forme d'un conduit de cheminée (2) à double paroi avec un tube intérieur (14), un tube extérieur (16) et une couche intermédiaire d'isolation (18) .

10. Conduit de cheminée (2) selon la revendication 9, **caractérisé en ce que** le tube intérieur (14) est configuré avec la zone d'enfichage conique (4).

11. Conduit de cheminée (2) selon la revendication 9 ou 10, **caractérisé en ce qu'**aucune couche intermédiaire d'isolation (18) n'est formée entre le tube extérieur (16) et le tube intérieur (14) dans la zone d'enfichage conique (4).

12. Conduit de cheminée (2) selon l'une des revendications 9 à 11, **caractérisé en ce que** le tube extérieur (16) possède du côté de l'extrémité, dans la zone de l'extrémité de liaison conique (4), un chanfrein (20) élargi vers l'extérieur dans le sens radial.

13. Système d'évacuation des fumées, notamment pour un système d'évacuation des fumées en acier inoxydable, comprenant plusieurs conduits de cheminée (2) selon l'une des revendications précédentes, la première extrémité de liaison d'un premier conduit de cheminée (2) étant enfichée par sa zone d'enfichage conique (4) dans la deuxième extrémité de liaison (6) d'un deuxième conduit de cheminée (2), deuxième extrémité de liaison (6) étant ainsi élargie de manière conique, de sorte que les deux extrémités de liaison reposent l'une contre l'autre en réalisant l'étanchéité.

14. Procédé de fabrication d'un système d'évacuation des fumées en utilisant plusieurs conduits de cheminée (2) selon l'une des revendications 1 à 13, avec lequel deux conduits de cheminée (2) sont enfichés l'un dans l'autre et l'extrémité de liaison (6) cylindrique du premier conduit de cheminée (2) est alors élargie de manière conique par la zone d'enfichage conique (4) du deuxième conduit de cheminée (2), de sorte que les deux extrémités de liaison reposent l'une contre l'autre en réalisant l'étanchéité

15. Procédé selon la revendication 14, avec lequel l'un des conduits de cheminée (2) est coupé à longueur du côté de la deuxième extrémité de liaison (6) cylindrique, et la coupe à longueur produit une nouvelle deuxième extrémité de liaison (6) cylindrique, laquelle est reliée par enfichage à une zone d'enfichage conique (4) d'une première extrémité de liaison du deuxième conduit de cheminée (2).
